# EUROPÄISCHE PATENTSCHRIFT

(11) **EP 3 140 147 B1**
(45) Veröffentlichungstag und Bekanntmachung des Hinweises auf die Patenterteilung: **06.01.2021**
(21) Anmeldenummer: 15708759.4
(22) Anmeldetag: 23.02.2015
(51) Int. Cl.: B60K 37/06

(54) **ANWENDERSCHNITTSTELLE UND VERFAHREN ZUM WECHSELN ZWISCHEN BILDSCHIRMANSICHTEN EINER ANWENDERSCHNITTSTELLE**
USER INTERFACE AND METHOD FOR CHANGING BETWEEN SCREEN VIEWS OF A USER INTERFACE
INTERFACE UTILISATEUR ET PROCÉDÉ PERMETTANT DE BASCULER ENTRE DES ÉCRANS D'UNE INTERFACE UTILISATEUR

(30) Priorität: 07.05.2014 DE 102014208502
(43) Veröffentlichungstag der Anmeldung: 15.03.2017
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2015/053713
(87) Internationale Veröffentlichungsnummer: WO 2015/169462

(56) Entgegenhaltungen:
- EP-A1- 2 246 214
- DE-A1-102009 023 897
- DE-A1-102009 046 376

## Beschreibung

### Stand der Technik

Die vorliegende Erfindung betrifft eine Anwenderschnittstelle sowie ein Verfahren zum Wechseln von einer ersten Bildschirmansicht zu einer zweiten Bildschirmansicht. Insbesondere betrifft die vorliegende Erfindung die Information des Anwenders über die Möglichkeit eines Wechsels zwischen Bildschirmansichten sowie eine Unterstützung des Anwenders beim Durchführen des Wechsels.

Für die Bedienung von Anwenderschnittstellen sind Gesten unter Kontakt mit einer Bedienoberfläche (z.B. Touchscreen) und frei im Raum durchgeführte Gesten (3DGesten) bekannt. Im Allgemeinen ist auch die Möglichkeit, zwischen Bildschirmansichten mit Hilfe von Wischgesten zu wechseln, bekannt. In Abhängigkeit der Gestaltung der Anwenderschnittstelle ist dem einzelnen Anwender diese Möglichkeit jedoch nicht stets bewusst, und je nach Situation kann eine Wischgeste unter Kontakt zur Bedienoberfläche mitunter nur mit Schwierigkeiten ausgeführt werden.

Beispielsweise vom Android-Betriebssystem für mobile Endgeräte ist eine Wischgeste zum Wechseln zwischen zwei Bildschirmansichten bekannt. Ein Verschieben einzelner Bedienflächen/Kacheln einer Bildschirmansicht ist hierbei jedoch nicht vorgesehen. Insbesondere bei der Verwendung im Fahrzeug ist für das kontaktanaloge Verschieben eines Homescreens eine erhöhte Hand-Auge-Koordination erforderlich, was zum Erfordernis einer erhöhten Aufmerksamkeit für den Anwender während der Fahrt führt.

DE 10 2009 023 897 A1 offenbart ein Verfahren zum Bedienen einer Anzeigevorrichtung für betrachtungsseitenspezifische Informationsanzeigen, bei welchem gemäß einem Ausführungsbeispiel eine Schaltfläche wie ein körperlicher Anfasser wirkt, der auf einem Quader befestigt ist, auf dessen Seiten unterschiedliche Informationsanzeigen zur Betrachtung durch den Fahrer respektive den Beifahrer angeordnet sind. Gemäß einem zweiten Ausführungsbeispiel wird im Ansprechen auf eine Annäherung eines Anwenders an die Anwenderschnittstelle die Anzeige derart verändert, dass die Anzeige bislang mehrere nicht vollständig ausfüllende Informationsanzeigen derart ausgewählt werden, dass anschließend nur noch eine einzige Informationsanzeige das Display vollständig ausfüllt.

DE 10 2009 046 376 A1 offenbart ein Fahrerassistenzsystem für ein Fahrzeug mit einer Eingabevorrichtung zur Eingabe von Daten. Über einen Sensor kann ein Anwender berührungslos mit in einem Head-up-Display dargestellten Elementen interagieren.

EP 2 246 214 A1 offenbart eine Vorrichtung zum Anzeigen von in Listen angeordneten Informationen, welche eine Annäherungssensorik für einen Wechsel zwischen einem Anzeigezustand, in welchem kein Bedienvorgang mittels der Eingabevorrichtung durchgeführt werden kann, und einem Bedienzustand, in welchem der Anwender mit auf einem Bildschirm dargestellten Elementen interagieren kann.

Es ist daher eine Aufgabe der vorliegenden Erfindung, eine Interaktion mit einzelnen Kacheln eines Homescreens mittels Wischgesten zu ermöglichen, obwohl ein Wechsel zwischen zwei Homescreens ebenfalls per Wischgeste durchführbar sein soll.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 2 gelöst. Das Verfahren dient dem Wechsel von einer ersten Bildschirmansicht zu einer zweiten Bildschirmansicht einer Anwenderschnittstelle. Die Bildschirmansichten können beispielsweise als sogenannte Homescreens ausgestaltet sein. Unter einem Homescreen wird im Rahmen der vorliegenden Erfindung eine solche Bildschirmansicht verstanden, in welcher Informationsflächen ("Kacheln") zu unterschiedlichen Funktionsbereichen nebeneinander angeordnet sind. Häufig können solche Kacheln durch den Anwender frei konfiguriert, verschoben und anderen Homescreens zugeordnet werden. Insbesondere ist ein inhaltsspezifischer Funktionsaufruf durch eine Interaktion mit einer Kachel des Homescreens nicht vorgesehen, sondern die Kacheln dienen lediglich einer Wiedergabe von Informationen zu unterschiedlichen Bereich. In einem ersten Schritt wird ein Eingabemittel (z.B. eine Hand eines Anwenders) in einem Annäherungsbereich einer Eingabeeinheit erfasst. Der Annäherungsbereich ist ein Erfassungsbereich eines Sensors, welcher dem mutmaßlichen Wunsch einer Interaktion des Anwenders mit der Anwenderschnittstelle zugeordnet ist. Beispielsweise kann ein solcher Annäherungsbereich in einem Raumbereich vor einem Anzeigemittel ("Bildschirm") oder einem Sensor zur Bedienung der Anwenderschnittstelle sein. Im Ansprechen auf das erfasste Eingabemittel wird ein Hinweis an einem Rand der ersten Bildschirmansicht zur Möglichkeit eines Wechsels zu der zweiten Bildschirmansicht eingeblendet. Auf diese Weise wird der Anwender animiert, die aktuelle Bildschirmansicht bei Bedarf zu verlassen und eine weitere Bildschirmansicht zu verwenden. Der Hinweis kann insbesondere an demjenigen Rand angeordnet sein, in Richtung dessen die zweite Bildschirmansicht (virtuell) angeordnet ist. Sofern ein Wischen nach links eine von rechts auf den Bildschirm gezogene Bildschirmansicht zur Anzeige bringt, kann der Hinweis am rechten Rand des Bildschirms angeordnet sein. Auf diese Weise kann auch eine wischende Interaktion mit dem Hinweis selbst in Richtung der Bildschirmmitte bzw. des gegenüberliegenden Randes erfolgen. Entsprechendes gilt für den Fall, dass die zweite Bildschirmansicht (virtuell) links des aktuell dargestellten Homescreens angeordnet ist, wodurch eine Wischgeste nach rechts mit einem am linken Bildschirmrand angeordneten Hinweis interagieren kann. Selbstverständlich ist eine Berührung eines Anzeigeelementes/Eingabeelementes erfindungsgemäß nicht essentiell. Schließlich kann die vorliegende Erfindung auch 3DGesten für den Wechsel zwischen den Bildschirmansichten verwenden. Lediglich eine für den Wechsel vordefinierte Geste wird erfindungsgemäß erkannt und veranlasst den Wechsel von der ersten zu der zweiten Bildschirmansicht.

Gemäß einem zweiten Aspekt der vorliegenden Erfindung wird eine Anwenderschnittstelle vorgeschlagen, welche einen Bildschirm, eine Eingabeeinheit und ein Auswerteeinheit umfasst. Der Bildschirm kann beispielsweise als Matrixanzeige ausgestaltet sein, welche die Anzeige eines wahlfreien Inhaltes ermöglicht. Die Eingabeeinheit kann eine Annäherungssensorik umfassen und eingerichtet sein, Gesten zur Bedienung der Anwenderschnittstelle zu erfassen. Die Auswerteeinheit kann beispielsweise einen programmierbaren Prozessor umfassen und in Form eines elektronischen Steuergerätes (ECU) ausgestaltet sein. Sie ist eingerichtet, ein Eingabemittel in einem Annäherungsbereich zu erfassen. Für den Annäherungsbereich gilt das in Verbindung mit dem erfindungsgemäßen Verfahren Gesagte entsprechend. Der Bildschirm ist eingerichtet, einen Hinweis zur Möglichkeit eines Wechsels zu einer zweiten Bildschirmansicht an einem Rand einer ersten Bildschirmansicht anzuzeigen. Der Hinweis kann beispielsweise als "Lasche" oder Anfasser (Bedienelement zur Entgegennahme einer Interaktion) ausgestaltet sein, auf welches sich eine vordefinierte Geste eines Anwenders bezieht. Im Ansprechen auf das Erkennen der vordefinierten Geste veranlasst die Auswerteeinheit einen Wechsel von der ersten Bildschirmansicht zu der zweiten Bildschirmansicht. Die Merkmale, Merkmalskombination und die sich aus diesen ergebenen Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

Die Unteransprüche zeigen bevorzugte Weiterbildungen der Erfindung.

Die vordefinierte Geste kann beispielsweise eine frei im Raum ausgeführte 3DGeste sein. Für den Wechsel zwischen Homescreens haben sich horizontale Wischgesten mittlerweile in unterschiedlichen Betriebssystemen durchgesetzt. Dabei kann die 3DGeste bevorzugt aus Richtung des Hinweises in Richtung einer Mitte der Bildschirmansicht (bzw. einer Mittelsenkrechten des Bildschirms) orientiert sein. Auf diese Weise ist eine Berührung der Eingabeeinheit nicht erforderlich, was eine sichere und komfortable Bedienung auch ohne ein präzises Greifen eines Anfassers ermöglicht. Eine solche Gestenbedienung ist daher insbesondere beim Bedienen fahrzeuggebundener Funktionen während des Befahrens einer unebenen Oberfläche von Vorteil.

Wenn der Hinweis als Anfasser ausgestaltet ist, kann die vordefinierte Geste beispielsweise eine TippGeste auf den Anfasser sein, im Ansprechen worauf die dem Hinweis zugeordnete zweite Bildschirmansicht automatisch aufgerufen wird. Der Aufruf kann beispielsweise entsprechend einem Aufruf per Wischgeste erfolgen, durch welche die zweite Bildschirmansicht die erste Bildschirmansicht aus dem sichtbaren Bereich "schiebt". Alternativ kann die vordefinierte Geste eine auf dem Anfasser startende und in Richtung einer Mitte der Bildschirmansicht (bzw. einer Mittelsenkrechten des Bildschirms) orientierte Wischgeste sein. Auf diese Weise kann der Wechsel der Bildschirmansichten von einer Interaktion mit der gesamten ersten Bildschirmansicht und einer Interaktion mit auf der ersten Bildschirmansicht dargestellten Kacheln/Funktionsflächen unterschieden werden. Im Ergebnis ist eine sich auf einzelne Kacheln beziehende Verschiebe (drag)Geste weiterhin möglich, während eine Interaktion per Wischgeste auch für den Wechsel der Bildschirmansichten verwendet werden kann. Solch unterschiedliche Interaktionsmöglichkeiten erschließen sich ohne einen erfindungsgemäßen Hinweis nicht für eine breite Anwenderschaft.

Das Einblenden des Hinweises kann bevorzugt erst im Ansprechen auf die weitere Bedingung eines Erkennens einer zweiten vordefinierten Geste erfolgen. Mit anderen Worten wird zunächst die zweite vordefinierte Geste erfasst und als Schlüsselgeste zur Starten der 3D-Gestenbedienung klassifiziert, so dass die Anwenderschnittstelle bzw. die verwendete Sensorik Detektionen im Annäherungsbereich vornimmt bzw. erfindungsgemäß durch Ausgabe des Hinweises quittiert. Auf diese Weise kann verhindert werden, dass ein versehentliches Kreuzen des Annäherungsbereiches die Ausgabe des Hinweises oder ein Wechseln von einer ersten Bildschirmansicht auf eine zweite Bildschirmansicht auslöst, ohne dass der Anwender eine entsprechende Intention hatte. Auf diese Weise werden Fehlbedienungen vermieden und die Akzeptanz einer erfindungsgemäß ausgestalteten Anwenderschnittstelle durch den Anwender wird sichergestellt.

Die vorgenannten bevorzugten Ausgestaltungen der vorliegenden Erfindung beziehen sich gleichermaßen auf das erfindungsgemäße Verfahren wie auch auf das erfindungsgemäße Anwenderendgerät. Letzteres kann gemäß einem dritten Aspekt der vorliegenden Erfindung beispielsweise als Drahtloskommunikationsgerät (z.B. ein Smartphone, ein TabletPC, ein PDA etc.) ausgestaltet sein. Hierbei umfasst die Anwenderschnittstelle häufig eine Kamera, welche in Richtung des Anwenders gerichtet ist. Diese dient beispielsweise der Durchführung von VideoTelefonie und kann erfindungsgemäß auch zur Annäherungssensorik und Gestenerkennung verwendet werden. Der Bildschirm des Drahtloskommunikationsgerätes kann im Ansprechen auf das Erfassen des Eingabemittels in diesem Detektionsbereich einen beispielsweise am linken und/oder rechten Rand angeordneten Hinweis anzeigen, durch welchen der Anwender über die Möglichkeit eines Wechsels zu einer zweiten Bildschirmansicht bzw. zu zwei zweiten Bildschirmansichten informiert wird.

Gemäß einem vierten Aspekt der vorliegenden Erfindung wird ein Fortbewegungsmittel vorgeschlagen, welches eine Anwenderschnittstelle gemäß der vorliegenden Erfindung aufweist. Dabei kann der Bildschirm als Kombiinstrument und/oder als zentrales Informationsdisplay in das Armaturenbrett des Fortbewegungsmittels integriert sein. Die Eingabeeinheit kann beispielsweise eine in der Mittelkonsole angeordnete InfrarotLEDLeiste und/oder eine über der Mittelkonsole im Dachhimmel angeordnete optische Kamera umfassen. Die Auswerteeinheit kann als elektronisches Steuergerät ausgestaltet sein, welches einen programmierbaren Prozessor umfasst. Die für die Durchführung des erfindungsgemäßen Verfahrens erforderliche Rechenleistung kann hierbei auch durch mit anderen Funktionen geteilte Hardware bereitgestellt werden. Insbesondere bei der Verwendung in einem Fortbewegungsmittel ermöglicht die vorliegende Erfindung eine rasche und zielgerichtete Bedienung der Anwenderschnittstelle, wodurch der Anwender seine Aufmerksamkeit in der Hauptsache auf den Straßenverkehr richten kann. Dies erhöht die Verkehrssicherheit und ermöglicht eine effiziente und sichere Bedienung der Anwenderschnittstelle auch während der Fahrt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht auf Komponenten eines Ausführungsbeispiels einer erfindungsgemäßen Anwenderschnittstelle in einem Ausführungsbeispiel eines erfindungsgemäß ausgestalteten Fortbewegungsmittels;
- Figur 2: eine schematische Ansicht auf Komponenten eines Ausführungsbeispiels einer erfindungsgemäßen Anwenderschnittstelle in einem Ausführungsbeispiel eines erfindungsgemäß ausgestalteten Drahtlos-Kommunikationsgerätes;
- Figur 3: eine erste Bildschirmansicht auf einen Homescreen eines Ausführungsbeispiels einer erfindungsgemäß ausgestalteten Anwenderschnittstelle;
- Figur 4: eine zweite Bildschirmansicht auf einen Homescreen eines Ausführungsbeispiels einer erfindungsgemäß ausgestalteten Anwenderschnittstelle;
- Figur 5: eine schematische Darstellung eines Bedienschrittes bezüglich einer Bildschirmansicht eines Ausführungsbeispiels einer erfindungsgemäß ausgestalteten Anwenderschnittstelle;
- Figur 6: eine Darstellung eines Wechsels zwischen einer ersten Bildschirmansicht und einer zweiten Bildschirmansicht eines Ausführungsbeispiels einer erfindungsgemäß ausgestalteten Anwenderschnittstelle;
- Figur 7: eine Darstellung einer zweiten Bildschirmansicht eines Ausführungsbeispiels einer erfindungsgemäß ausgestalteten Anwenderschnittstelle;
- Figur 8: eine Darstellung einer ersten Bildschirmansicht, welche lediglich eine einzige (virtuell) zur ihrer Rechten angeordnete zweite Bildschirmansicht aufweist; und
- Figur 9: ein Flussdiagramm veranschaulichend Schritte eines Ausführungsbeispiels eines erfindungsgemäßen Verfahrens.

### Ausführungsformen der Erfindung

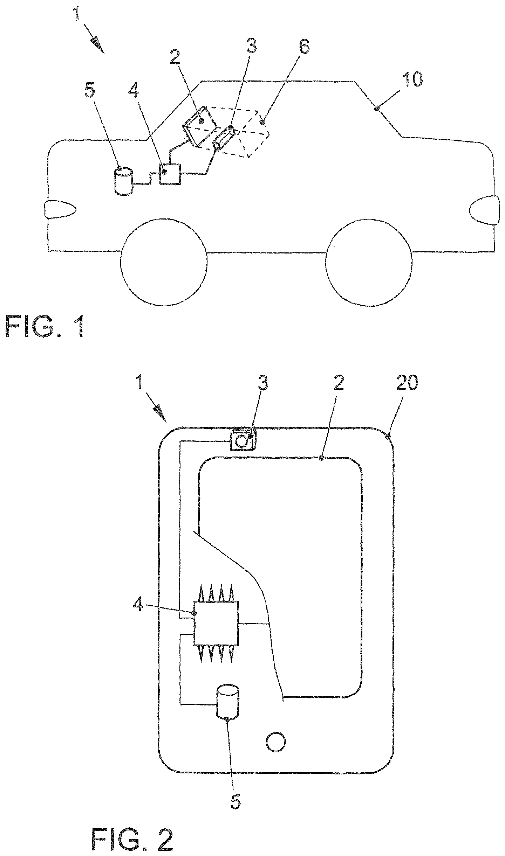

Figur 1 zeigt einen PKW 10 als Fortbewegungsmittel, in welchem eine Anwenderschnittstelle 1 gemäß einem Ausführungsbeispiel der vorliegenden Erfindung vorgesehen ist. Der Bildschirm 2 ist in das Armaturenbrett des PKW 10 eingelassen und kommunikationstechnisch mit einem elektronischen Steuergerät 4 verbunden. Unterhalb des Bildschirms 2 ist eine InfrarotLEDLeiste 3 als Eingabeeinheit angeordnet, über welche ein Annäherungsbereich 6 vor dem Bildschirm 2 aufgespannt wird. Im Annäherungsbereich 6 befindliche Eingabemittel eines Anwenders werden somit durch die InfrarotLEDLeiste 3 erfasst und dem elektronischen Steuergerät 4 gemeldet. Aus den Signalen der InfrarotLEDLeiste 3 erkennt das elektronische Steuergerät 4 das Vorhandensein des Eingabemittels sowie etwaig ausgeführte Gesten. Diese können durch Abgleich mit in einem Datenspeicher 5 abgespeicherten Referenzen klassifiziert werden. Im Ansprechen auf einen erfolgreichen Abgleich kann eine mit der vordefinierten Geste assoziierte Funktion ausgeführt werden.

Figur zeigt ein TabletPC 20 als Anwenderendgerät, in welchem eine erfindungsgemäß ausgestaltete Anwenderschnittstelle 1 vorgesehen ist. Die auch für Videotelefonie verwendbare optische Kamera 3 ist hierzu kommunikationstechnisch mit einem programmierbaren Prozessor 4 als Auswerteeinheit verbunden. Für den Abgleich mit durch die Kamera 3 erfassten Gesten ist ein Datenspeicher 5 vorgesehen, in welchem Referenzen für Klassen vordefinierter Gesten abgespeichert sind. Zur Kenntlichmachung der vorgenannten Bauteile ist der Bildschirm 2 des Tablet-PCs 20 abschnittsweise freigeschnitten.

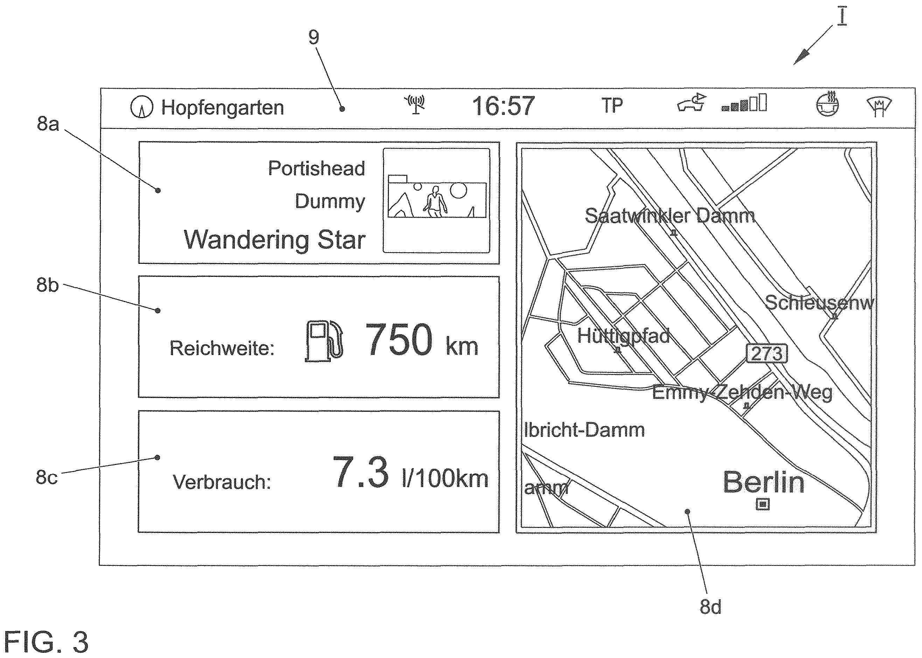

Figur 3 zeigt ein Ausführungsbeispiel eines ersten Homescreens I als erste Bildschirmansicht einer Anwenderschnittstelle gemäß der vorliegenden Erfindung. Am oberen Rand des Homescreens ist eine Statusleiste 9 angeordnet, welche eine Zusammenfassung bezüglich des Betriebszustandes der erfindungsgemäßen Anwenderschnittstelle bzw. mit ihr verbundener Funktionen zeigt. Unterhalb der Statusleiste 9 sind auf der linken Bildschirmhälfte drei übereinander angeordnete Kacheln 8a, 8b, 8c dargestellt, welche durch Verschieben und Fallenlassen (drag and drop) Gesten ebenso wie eine auf der rechten Bildschirmhälfte angeordnete Kachel 8d verschoben und/oder verändert werden können. Die erste Kachel 8a ist einer Musikwiedergabe zugeordnet. Die zweite Kachel 8b ist einer aktuell geschätzten Reichweite zugeordnet. Die dritte Kachel 8c ist einem durchschnittlichen Verbrauch eines Fortbewegungsmittels zugeordnet. Die auf der rechten Bildschirmseite angeordnete vierte Kachel 8d zeigt einen Kartenausschnitt für eine Navigationsfunktion.

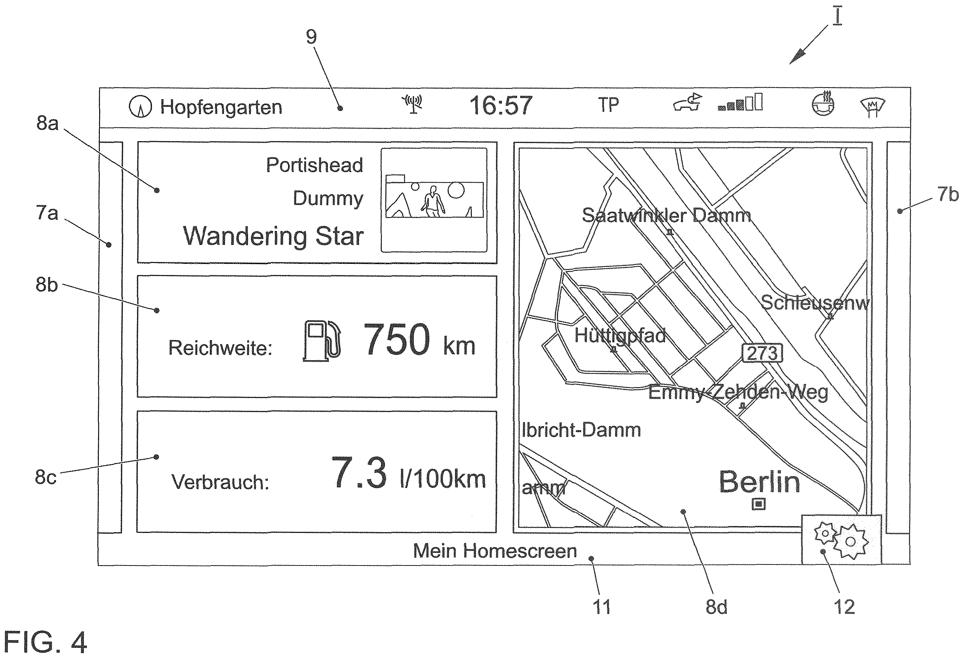

Figur 4 zeigt die in Figur 3 gezeigte Darstellung, nachdem die Annäherungssensorik die Präsenz eines Eingabemittels in einem Annäherungsbereich erkannt hat. Im Ansprechen darauf werden zwei laschenförmige Anfasser 7a, 7b als Hinweise links bzw. rechts der Kacheln 8a, 8b, 8c, 8d angezeigt. Die Anfasser 7a, 7b erstrecken sich dabei in einem schmalen vertikalen Randbereich entlang der gesamten Höhe der Kacheln. Für einen Wechsel von dem dargestellten ersten Homescreen I auf einen (nicht dargestellten) zweiten Homescreen bieten sich dem Anwender nun mehrere Möglichkeiten. Entweder führt er eine 3DWischgeste nach links oder rechts aus, um zu einem rechts- bzw. links des dargestellten ersten Homescreens I angeordneten zweiten Homescreen zu gelangen. Alternativ kann der Anwender eine TippGeste auf den ersten Anfasser 7a oder auf den zweiten Anfasser 7b ausführen. Eine dritte Möglichkeit für den Wechsel zu einem zweiten bzw. dritten Homescreen besteht darin, den jeweiligen Anfasser 7a, 7b zu berühren und in Richtung der Trennlinie zwischen den ersten drei Kacheln 8a, 8b, 8c und der vierten Kachel 8d zu ziehen. Hierdurch bleibt die Möglichkeit einer drag-and-drop-Interaktion mit den einzelnen Kacheln 8a, 8b, 8c 8d erhalten, ohne dass eine solche Interaktion einen (in diesem Fall unerwünschten) Wechsel zum zweiten bzw. dritten Homescreen bewirkt. Unterhalb der vierten Kachel 8d ist im Ansprechen auf die Annäherungserkennung eine Schaltfläche 12 eingeblendet worden, mittels welcher der Anwender in einen Editiermodus gelangen kann. Beispielsweise kann die Bezeichnung 11 des dargestellten Homescreens I über die Schaltfläche 12 angepasst werden.

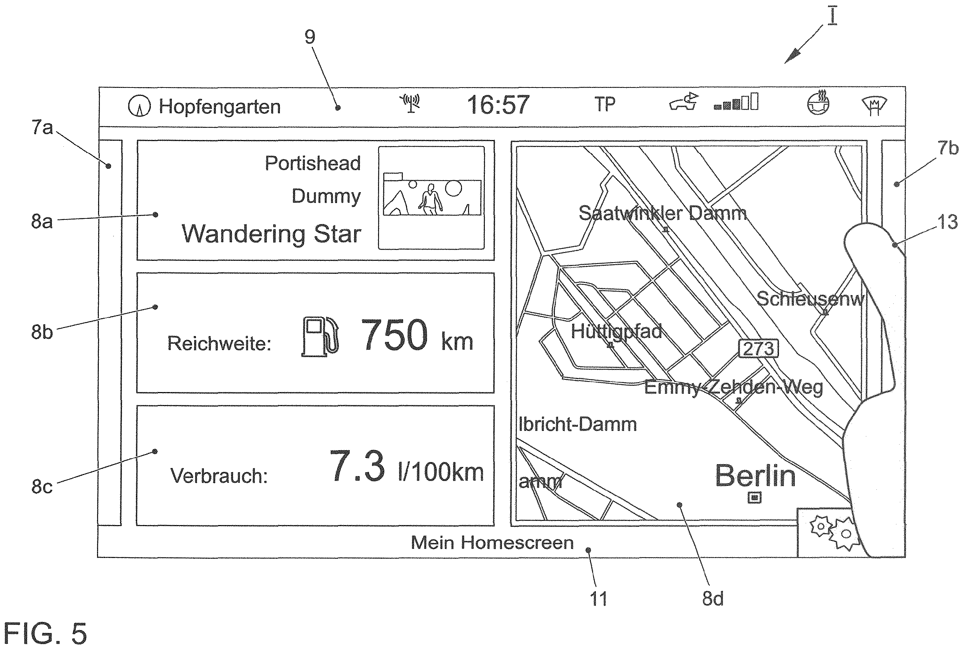

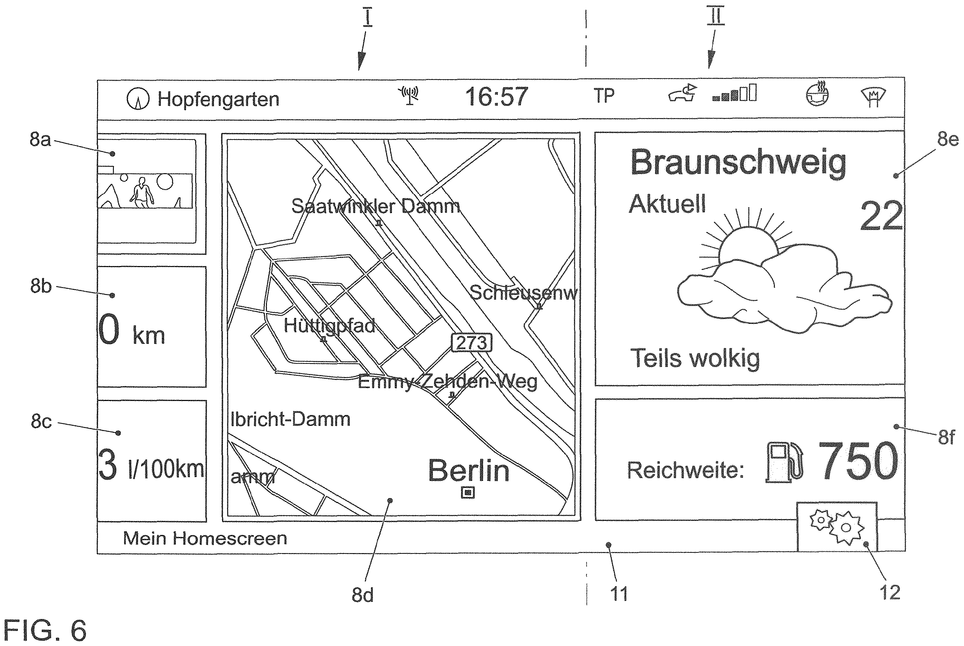

Figur 5 zeigt die in Figur 4 gezeigte Bildschirmansicht I, in welcher die Hand 13 des Anwenders eine Tipp-Geste bezüglich des am rechten Bildschirmrand angeordneten Anfassers 7b ausführt. Im Ansprechen darauf schiebt ein (virtuell) rechts neben dem dargestellten ersten Homescreen I angeordneter zweiter Homescreen II (siehe Figur 6) den ersten Homescreen I über den linken Bildschirmrand aus dem sichtbaren Bereich.

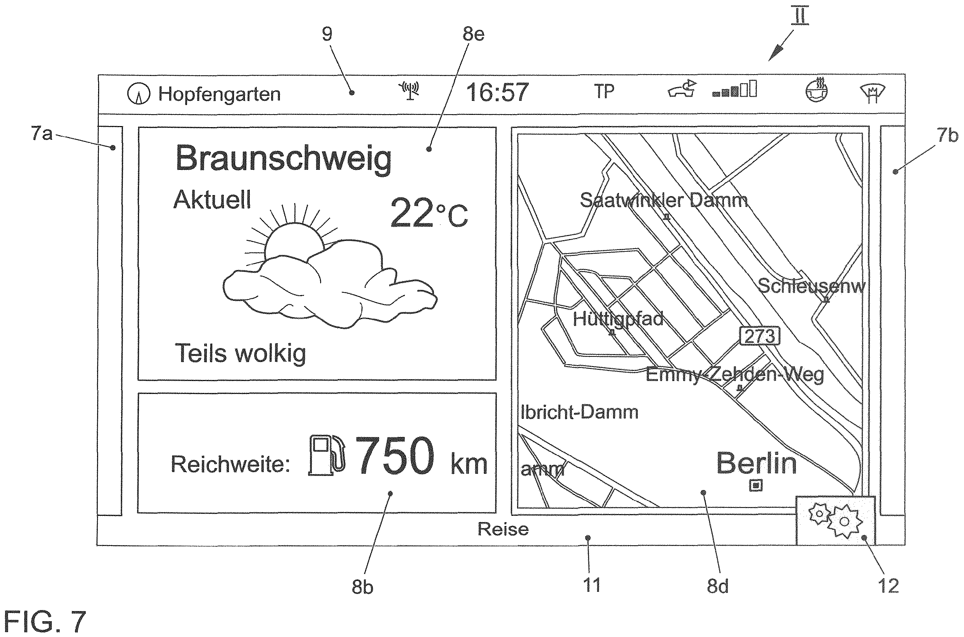

Figur 6 zeigt den Wechsel von einem ersten Homescreen I als erste Bildschirmansicht auf einen zweiten Homescreen II als zweite Bildschirmansicht. Hierbei wird auch die Bezeichnung 11 des ersten Homescreens I nach links aus dem sichtbaren Bereich verschoben, während die Schaltfläche 12 zum Aufrufen des Editiermodus' ortsfest in der rechten unteren Ecke des sichtbaren Bereiches verbleibt. Figur 7 zeigt ein Ausführungsbeispiel des zweiten Homescreens II, welcher lediglich 3 Kacheln 8b, 8d und 8e aufweist. Gegenüber dem ersten Homescreen I sind die erste Kachel 8a zur Musikwiedergabe und die dritte Kachel 8c bezüglich des aktuellen Verbrauches gegen eine fünfte Kachel 8e zum aktuellen Wetter in Braunschweig ausgetauscht worden. Die fünfte Kachel 8e ist hierbei exakt dort angeordnet, wo zuvor die erste Kachel 8a und die zweite Kachel 8b angeordnet waren. Die zweite Kachel 8b ist nun unterhalb der fünften Kachel 8e angeordnet. Die Bezeichnung 11 des zweiten Homescreens II lautet: "Reise". Entsprechend ist die vierte Kachel 8d weiterhin dem bereits zuvor angezeigten Kartenausschnitt gewidmet.

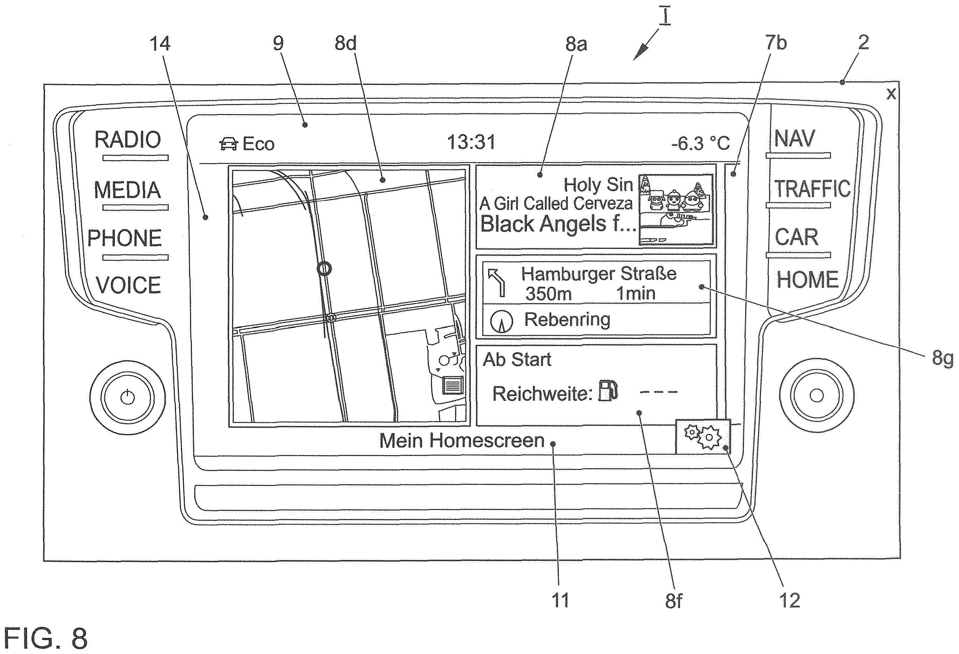

Figur 8 zeigt eine alternative Darstellung einer ersten Bildschirmansicht I auf einem Bildschirm 2 einer erfindungsgemäßen Anwenderschnittstelle. Hierbei ist die linke Bildschirmhälfte mit einem Kartenausschnitt als vierte Kachel 8d gefüllt, während die rechte Bildschirmhälfte drei übereinander angeordnete Kacheln 8a, 8g, 8f zeigt. Im Ansprechen auf eine erkannte Annäherung eines Eingabemittels wird lediglich am rechten Bildschirmrand ein Anfasser 7b als Hinweis eingeblendet. Ein entsprechender erster Anfasser fehlt am linken Bildschirmrand 14, da links des dargestellten dritten Homescreens III kein (virtueller) weiterer Homescreen angeordnet ist. Über den zweiten Anfasser 7b am rechten Bildschirmrand kann der Anwender wie vorbeschrieben zu einem (virtuell) rechts der gezeigten Darstellung angeordneten weiteren Homescreen gelangen.

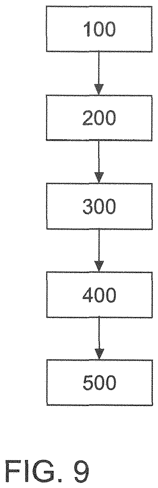

Figur 9 zeigt ein Flussdiagramm veranschaulichend Schritte eines Ausführungsbeispiels eines erfindungsgemäßen Verfahrens. In einem ersten Schritt 100 wird eine Schlüsselgeste als zweite vordefinierte Geste erkannt. Diese startet die berührungslose Interaktion mit der erfindungsgemäßen Anwenderschnittstelle. In Schritt 200 wird die Präsenz des Eingabemittels im Annäherungsbereich der Eingabeeinheit erfasst und im Ansprechen darauf in Schritt 300 ein Hinweis an einem Rand einer aktuellen Bildschirmansicht zur Möglichkeit eines Wechsels zu einer zweiten Bildschirmansicht eingeblendet. In Schritt 400 wird nachfolgend eine vordefinierte Geste eines Anwenders erkannt, welche als berührungslose 3DWischGeste in einem entsprechenden Raumbereich bzw. als TippGeste oder als WischGeste unter Interaktion mit dem Hinweis ausgeführt werden im Ansprechen, worauf in Schritt 500 die erste Bildschirmansicht gegen eine zweite Bildschirmansicht ausgetauscht wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: Eingabeeinheit
- 4: Auswerteeinheit
- 5: Datenspeicher
- 6: Annäherungsbereich
- 7a, 7b: Hinweis
- 8a, 8b, 8c, 8d, 8e, 8f, 8g: Kacheln
- 9: Statusleiste
- 10: PKW
- 11: Bezeichnung
- 12: Schaltfläche
- 13: Hand des Anwenders
- 14: Bildschirmrand ohne Hinweis
- 20: Tablet-PC
- 100-500: Verfahrensschritte
- I: erster Homescreen
- II: zweiter Homescreen

## Patentansprüche

1. Verfahren zum Wechseln von einer ersten Bildschirmansicht (I) zu einer zweiten Bildschirmansicht (II) einer Anwenderschnittstelle (1) umfassend die Schritte:
- Erfassen (200) eines Eingabemittels (13) in einem Annäherungsbereich (6) einer Eingabeeinheit (3), **gekennzeichnet durch** im Ansprechen darauf
- Einblenden (300) eines Hinweises (7a, 7b) an einem Rand der ersten Bildschirmansicht (I) zur Möglichkeit eines Wechsels zu der zweiten Bildschirmansicht (II),
- Erkennen (400) einer vordefinierten Geste eines Anwenders, und
- Wechseln (500) von der ersten Bildschirmansicht (I) zu der zweiten Bildschirmansicht (II).

2. Anwenderschnittstelle umfassend
- einen Bildschirm (2),
- eine Eingabeeinheit (3), und
- eine Auswerteeinheit (4), wobei
- die Eingabeeinheit (3) eingerichtet ist, ein Eingabemittel (13) in einem Annäherungsbereich (6) zu erfassen, **dadurch gekennzeichnet, dass**
- der Bildschirm (2) eingerichtet ist, im Ansprechen darauf einen Hinweis (7a, 7b) zur Möglichkeit eines Wechsels zu einer zweiten Bildschirmansicht (II) an einem Rand einer ersten Bildschirmansicht (I) anzuzeigen,
- die Auswerteeinheit (4) eingerichtet ist, eine vordefinierte Geste eines Anwenders zu erkennen, und die Anwenderschnittstelle (1) somit einrichtet,
- im Ansprechen auf die vordefinierte Geste von der ersten Bildschirmansicht (I) zu der zweiten Bildschirmansicht (II) zu wechseln.

3. Verfahren nach Anspruch 1 oder Anwenderschnittstelle nach Anspruch 2, wobei die vordefinierte Geste eine frei im Raum ausgeführte, insbesondere horizontale, bevorzugt aus Richtung des Hinweises (7a, 7b) in Richtung einer Mitte der Bildschirmansicht (I, II) orientierte, Wischgeste, umfasst.

4. Verfahren nach einem der Ansprüche 1 oder 3 oder Anwenderschnittstelle nach einem der Ansprüche 2 oder 3, wobei der Hinweis (7a, 7b) ein Anfasser ist, und wobei die vordefinierte Geste eine Tipp-Geste auf den Anfasser ist oder eine auf dem Anfasser startende und in Richtung einer Mitte der Bildschirmansicht (I, II) orientierte Wischgeste umfasst.

5. Verfahren nach einem der Ansprüche 1, 3 oder 4 oder Anwenderschnittstelle nach einem der Ansprüche 2 bis 4, wobei das Eingabemittel (13) eine Hand eines Anwenders ist.

6. Verfahren nach einem der Ansprüche 1, 3, 4 oder 5 oder Anwenderschnittstelle nach einem der Ansprüche 2 bis 5, wobei die erste Bildschirmansicht (I) ein erster Homescreen und/oder die zweite Bildschirmansicht (II) ein zweiter Homescreen ist.

7. Verfahren nach einem der Ansprüche 1 oder 3 bis 6 oder Anwenderschnittstelle nach einem der Ansprüche 2 bis 6, wobei das Einblenden (300) des Hinweises (7a, 7b) erst im Ansprechen auf ein Erkennen (100) einer zweiten vordefinierten Geste erfolgt.

8. Anwenderendgerät, insbesondere Drahtloskommunikationsgerät, umfassend eine Anwenderschnittstelle (1) nach einem der vorstehenden Ansprüche 2 bis 7.

9. Fortbewegungsmittel umfassend eine Anwenderschnittstelle (1) nach einem der vorstehenden Ansprüche 2 bis 7.

## Claims

1. Method for changing from a first screen view (I) to a second screen view (II) of a user interface (1), comprising the steps of:
- detecting (200) an input means (13) in an approach region (6) of an input unit (3), **characterized by,** in response thereto,
- displaying (300) an indication (7a, 7b) at an edge of the first screen view (I) regarding the possibility of a change to the second screen view (II),
- detection (400) of a predefined gesture of a user, and changing (500) from the first screen view (I) to the second screen view (II).

2. User interface comprising
- a screen (2),
- an input unit (3), and
- an evaluation unit (4), wherein
- the input unit (3) is configured to detect an input means (13) in an approach region (6), **characterized in that**
- the screen (2) is configured to display, in response thereto, an indication (7a, 7b) regarding the possibility of changing to a second screen view (II) at an edge of a first screen view (I),
- the evaluation unit (4) is configured to recognize a predefined gesture of a user, and thus configures the user interface (1),
- to change from the first screen view (I) to the second screen view (II) in response to the predefined gesture.

3. Method according to claim 1 or user interface according to claim 2, wherein the predefined gesture comprises a swiping gesture, in particular horizontally, freely executed in space, preferably from the direction of the indication (7a, 7b) towards a center of the screen view (I, II).

4. Method according to any of claims 1 or 3 or user interface according to any of claims 2 or 3, wherein the indication (7a, 7b) is a drag point, and wherein the predefined gesture is a tapping gesture on the drag point or comprises a swiping gesture starting on the drag point and in the direction toward a center of the screen view (I, II).

5. Method according to any of claims 1, 3 or 4 or user interface according to any of claims 2 to 4, wherein the input means (13) is a hand of a user.

6. Method according to any of claims 1, 3, 4 or 5 or user interface according to any of claims 2 to 5, wherein the first screen view (I) is a first home screen and/or the second screen view (II) is a second home screen.

7. Method according to any of claims 1 or 3 to 6 or user interface according to any of claims 2 to 6, wherein the displaying (300) of the indication (7a, 7b) only occurs in response to a detection (100) of a second predefined gesture.

8. User device, in particular an electronic wireless communication device, comprising a user interface (1) according to any of the preceding claims 2 to 7.

9. Means of transportation comprising a user interface (1) according to any of the preceding claims 2 to 7.

## Revendications

1. Procédé permettant de basculer d'un premier affichage écran (I) vers un deuxième affichage écran (II) d'une interface utilisateur (1) comprenant les étapes de :
- détection (200) de moyens d'entrée (13) dans une zone d'approche (6) d'une unité d'entrée (3), **caractérisé par,** en réponse à celle-ci,
- affichage (300) d'une indication (7a, 7b) sur un bord du premier affichage écran (I) concernant la possibilité d'un basculement vers le deuxième affichage écran (II),
- reconnaissance (400) d'un geste prédéfini d'un utilisateur, et
- basculement (500) du premier affichage écran (I) vers le deuxième affichage écran (II).

2. Interface utilisateur comprenant
- un écran (2),
- une unité d'entrée (3), et
- une unité de traitement (4),
- l'unité d'entrée (3) étant configurée pour détecter des moyens d'entrée (13) dans une zone d'approche (6), **caractérisée en ce que**
- l'écran (2) est configuré pour, en réponse à ceci, afficher une indication (7a, 7b) concernant une possibilité de basculement vers un deuxième affichage écran (II) sur un bord d'un premier affichage écran (I),
- l'unité de traitement (4) est configurée pour reconnaitre un geste prédéfini d'un utilisateur, et configure ainsi l'interface utilisateur (1) pour,
- en réponse au geste prédéfini, basculer du premier affichage écran (I) vers le deuxième affichage écran (II).

3. Procédé selon la revendication 1 ou interface utilisateur selon la revendication 2, dans lequel ou laquelle le geste prédéfini comprend un geste de glissement effectué librement dans l'espace, en particulier horizontalement, de préférence orienté de la direction de l'indication (7a, 7b) vers la direction d'un centre de l'affichage écran (I, II).

4. Procédé selon l'une quelconque des revendications 1 ou 3 ou interface utilisateur selon l'une quelconque des revendications 2 ou 3, dans lequel ou laquelle l'indication (7a, 7b) est une poignée, et dans lequel ou laquelle le geste prédéfini est un geste d'effleurement sur la poignée ou comprend un geste de glissement commençant sur la poignée et orientée en direction d'un centre de l'affichage écran (I, II).

5. Procédé selon l'une quelconque des revendications 1, 3 ou 4 ou interface utilisateur selon l'une quelconque des revendications 2 à 4, dans lequel ou laquelle les moyens d'entrée (13) sont une main d'un utilisateur.

6. Procédé selon l'une quelconque des revendications 1, 3, 4 ou 5 ou interface utilisateur selon l'une quelconque des revendications 2 à 5, dans lequel ou laquelle le premier affichage écran (I) est un premier écran d'accueil et/ou le deuxième affichage d'écran (II) est un deuxième écran d'accueil.

7. Procédé selon l'une quelconque des revendications 1 ou 3 à 6 ou interface utilisateur selon l'une quelconque des revendications 2 à 6, dans lequel ou laquelle l'affichage (300) de l'indication (7a, 7b) se produit seulement en réponse à la reconnaissance (100) d'un deuxième geste prédéfini.

8. Appareil utilisateur, en particulier appareil de communication sans fil, comprenant une interface utilisateur (1) selon l'une quelconque des revendications 2 à 7 précédentes.

9. Moyens de locomotion comprenant une interface utilisateur (1) selon l'une quelconque des revendications 2 à 7 précédentes.
